Europäisches Patentamt

European Patent Office

Office européen des brevets

(11) Publication number: **0 469 346 A1**

## EUROPEAN PATENT APPLICATION

(21) Application number: **91111382.7**

(22) Date of filing: **09.07.91**

(51) Int. Cl.5: **A01F 25/13**

(30) Priority: **31.07.90 IT 362790**

(43) Date of publication of application:
**05.02.92 Bulletin 92/06**

(84) Designated Contracting States:
**AT BE CH DE DK ES FR GB GR LI LU NL SE**

(71) Applicant: **Ferrari, Alberto**
**43, via Bersogneto - Enzano**
**I-43058 Sorbolo (Parma)(IT)**

(72) Inventor: **Ferrari, Alberto**
**43, via Bersogneto - Enzano**
**I-43058 Sorbolo (Parma)(IT)**

(74) Representative: **Sassatelli, Franco T., Dr.**
**c/o INIP via Ruggi 5**
**I-40137 Bologna(IT)**

(54) **Cover for cylindrical hay bales.**

(57) A round bale cover in the form of arigid cowe (1) with supports (2) to locate on the flat side of a round bale, such that a space (3), allowing free movement of air, is produced. Chains (4) with pins (5), to be inserted into the bale, hold the cover down.

The invented device refers to a rigid re-employed cover for cylindrical hay bales which permits the product convervation and maturation. In the hay convervation workings, from the traditionally presses parallelepiped forms, it is changed over cylindrical forms of major cubage said "rotobales" which permit a working time reduction during the harvesting and storage phases. Actually said "rotobales" are left on the ground, threshing floor or other, for a time of about 50 (fifty) days useful to the maturation product and then they are stores in approached piles into barn so to permit protection against atmospheric agents. As a consequence of this during the maturation phase, owing to atmospheric precipitations or other similar agents, the product can deteriorate and, persisted into itself damp when it is put into barn, it can reach to its complete decay by forming moulds and fungosity. On the other hand if it is made a summary covering of the "rotobales" during maturation with plastic wrappings it is avoided said water absorption effect owing to precipitations, or otherwise in suspension in the air, but it is forbidden the product ventilation so determining the supposition for condensation effect which is determined in the interspace between the pressed hay mass of "rotobale" and said plastic covering wrapping.

The invented device avoids both above indicated cases by means of a new re-employed covering mean arranges to permit the natural product ventilation and equipped with constraint means to permit the covering disposal integral with the upper circular wall of the "rotobale". In general the invented device is usable to constitute the covering for one or more "rotobales", generally a set of three, disposed in piles for the only maturation phase and also to become a permanent covering in the product convervation phase so obviating to the necessity to transfer product into barn. The invented device is based on the presupposition that, being the cylindrical bale realized by continuous rolling up in wrapper of the leafage picked up from the ground, in its inner is formed a vertical airing canals system which permits the gradual removal of the overplus damp in self-possessed by means of evaporation which happens through its upper circular wall or however the upper circular wall of the last "rotobale" in the pile disposition. In this way, with the stabilization in the right hygroscopic grade, the product can ripen in the open air and in protected condition.

Substantially the invented device provides the realization of a shaped cone rigid impermeable cover 1 with a system of three supports 2 to permit an interspace 3, in perimeter comunication with outwards, useful to take place the aeration on the covered level wall of the "rotobale". For the position stabilization of cover 1, obviating to the wind, is foreseen a system of chain cables 4 with end pins 5 which can be inserted in appropriate position in the product pressed mass.

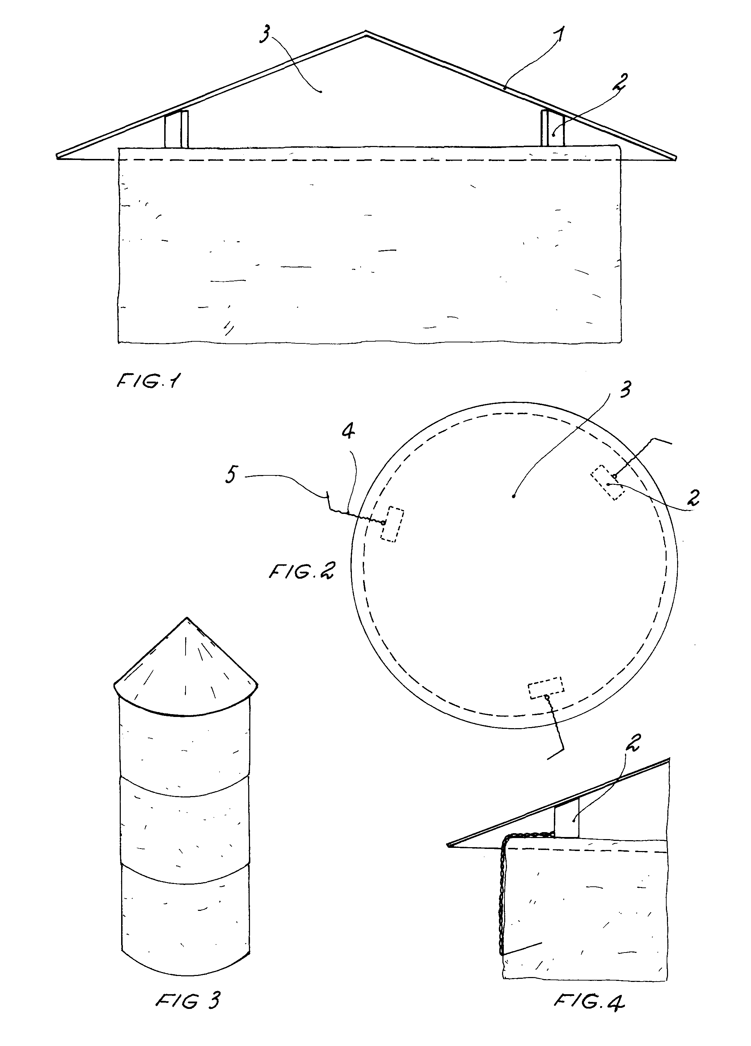

A realization form of the invented device is illustrated in an indicative and not limiting way in drawings of table 1. Referring to this table, fig. 1 is longitudinal section view of a sheet zincate sole cover stabilized in position on the "rotobale" indicated in its end part to show the covered interspace 3 useful for natural aeration. Fig. 2 is view from the top of the same cover of fig. 1 to show the supports system 2 which bears the cover anchorage system to the "rotobale". Fig. 3 is perspective view of the device ideal version which foresees the covering of a pile made of three cylindrical hay bales. Fig. 4 is longitudinal section particular view realized in correspondance of a support 2 to show one of the three fitting up pin means forming the anchorage system.

In the realizations the cover form, the sheet slope, the support and anchorage means, the materials and each other means could be different realized or changed and/or integrated with other suitable for the use.

## Claims

1. Cover for cylindrical hay bales, caracterized by the fact that foresses a shaped cone rigid impermeable cover (1) with a system of three supports (2) to permit and interspace (3), in perimeter communication with outwards, useful to take place the aeration of the covered level wall of the "rotobale". For the position stabilization of cover (1), obviating to the wind, it is foreseen a system of chain cables (4) with end pins (5) which can be inserted in appropriate position in the product pressed mass.

FIG.1

FIG.2

FIG 3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | CH-A-177 873  (FRICKER E.)<br>* the whole document *<br>– – – | 1 | A 01 F 25/13 |
| Y | US-A-4 248 343  (SCHAEFER A.W.)<br>* column 2, line 28 - column 3, line 48; figures 1-8 *<br>– – – | 1 | |
| A | FR-A-896 058  (GRANGER R.)<br>* the whole document *<br>– – – | 1 | |
| A | US-A-4 712 672  (ROY G.N.)<br>* column 3, line 1 - column 4, line 60; figures 1-3 *<br>– – – | 1 | |
| A | GB-A-17 076  (JACKSON P.R.)<br>* the whole document *<br>– – – | 1 | |
| A | US-A-4 939 874  (COMPTON R.C.)<br>* column 6, line 37 - column 9, line 40; figures 1-13 *<br>– – – – – | 1 | |
| | | | TECHNICAL FIELDS SEARCHED (Int. Cl.5)<br><br>A 01 F |

The present search report has been drawn up for all claims

| Place of search | Date of completion of search | Examiner |
|---|---|---|
| The Hague | 19 September 91 | ELSWORTH D.S. |